(19) Europäisches Patentamt
European Patent Office
Office européen des brevets

(11) **EP 2 447 693 A2**

(12) **EUROPÄISCHE PATENTANMELDUNG**

(43) Veröffentlichungstag:
**02.05.2012 Patentblatt 2012/18**

(51) Int Cl.:
***G01L 9/00*** *(2006.01)*

(21) Anmeldenummer: **11179343.6**

(22) Anmeldetag: **30.08.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **03.09.2010 DE 102010036271**
        **11.11.2010 DE 102010051049**

(71) Anmelder: **EPCOS AG**
   **81669 München (DE)**

(72) Erfinder:
   • **Heinickel, Patrick**
     **63811 Stockstadt (DE)**

   • **Werthschützky, Roland**
     **14532 Kleinmachnow (DE)**
   • **Peschka, Andreas**
     **14552 Michendorf (DE)**
   • **Thiele, Peter**
     **12623 Berlin (DE)**
   • **Südkamp, Winfried**
     **14532 Stahnsdorf (DE)**

(74) Vertreter: **Gröger, Stephan**
   **Epping Hermann Fischer**
   **Patentanwaltsgesellschaft mbH**
   **Ridlerstraße 55**
   **DE-80339 München (DE)**

(54) **Piezoresistives Druckmesselement und Verwendung des Druckmesselements**

(57)   Es wird ein piezoresistives Druckmesselement (1) angegeben, welches ein piezoresistives schichtförmiges Halbleiter-Widerstandselement (2) auf einem Substrat (3) aufweist. Das Halbleiter-Widerstandselement (2) weist eine erste Dicke (4) und das Substrat (3) eine zweite Dicke (5) auf, wobei das Verhältnis der ersten Dicke (4) zur zweiten Dicke (5) einen Wert größer oder gleich 0,5·A und kleiner oder gleich 1,5·A aufweist, mit

$$A = 2\sqrt{\frac{K_1}{K_2}}$$ . Dabei ist $K_1$ der Kompressionsmodul

des Substrats (3) und $K_2$ der Kompressionsmodul des Halbleiter-Widerstandselements (2).

   Des Weiteren wird eine Verwendung des Druckmesselements (1) zur Messung eines Druckbereiches angegeben.

Fig. 1

EP 2 447 693 A2

**Beschreibung**

Es wird ein piezoresistives Druckmesselement angegeben, welches ein piezoresistives schichtförmiges Halbleiter-Widerstandselement auf einem Substrat aufweist.

In der Druckschrift DE 19963786 A1 ist ein Druckmesselement mit piezoresistiven Halbleiterelementen beschrieben.

Es ist eine zu lösende Aufgabe von zumindest einigen Ausführungsformen, ein Druckmesselement mit verbesserten Eigenschaften anzugeben. Insbesondere soll das hier beschriebene Druckmesselement eine hohe Empfindlichkeit aufweisen.

Diese Aufgabe wird durch einen Gegenstand mit den Merkmalen des unabhängigen Patentanspruchs gelöst. Vorteilhafte Ausführungsformen und Weiterbildungen des Gegenstands gehen weiterhin aus der nachfolgenden Beschreibung und den Zeichnungen hervor.

Gemäß zumindest einer Ausführungsform weist ein piezoresistives Druckmesselement ein piezoresistives schichtförmiges Halbleiter-Widerstandselement auf einem Substrat auf. Beispielsweise kann das Halbleiter-Widerstandselement als Halbleiterblättchen ausgeführt sein. Das Halbleiter-Widerstandselement weist eine erste Dicke und das Substrat weist eine zweite Dicke auf.

Werden das piezoresistive Druckmesselement und insbesondere das Halbleiter-Widerstandselement einem Druck ausgesetzt, so bewirkt der Druck eine Verformung des piezoresistiven schichtförmigen Halbleiter-Widerstandselements, wodurch der Widerstand oder auch eine Änderung des Widerstands des Halbleiter-Widerstandselements als Maß für den Druck oder eine Druckänderung ermittelt werden kann.

Vorzugsweise ist die zweite Dicke an die erste Dicke angepasst, das heißt das Verhältnis von zweiter Dicke zu erster Dicke ist dahingehend optimiert, dass das Druckmesselement besonders gute Eigenschaften, beispielsweise eine hohe Empfindlichkeit und/oder einen großen Messbereich, aufweist.

Die Erfinder haben herausgefunden, dass bei der Optimierung des Druckmesselements vor allem hinsichtlich einer Steigerung der Empfindlichkeit des Druckmesselements das Verhältnis der ersten Dicke, das heißt der Dicke des Halbleiter-Widerstandselements, zur zweiten Dicke, also der Dicke des Substrates, eine entscheidende Rolle spielt. So kann in Abhängigkeit von Widerstandselement- und Substratmaterialien ein Bereich für ein eindeutiges Verhältnis von erster Dicke zu zweiter Dicke gefunden werden, bei dem die Empfindlichkeit des Druckmesselements maximiert ist.

Gemäß einer weiteren Ausführungsform weist das Verhältnis der ersten Dicke zur zweiten Dicke einen Wert größer oder gleich $0,5 \cdot A$ und kleiner oder gleich

$1,5 \cdot A$ auf, wobei der Parameter A durch $2\sqrt{\dfrac{K_1}{K_2}}$ gegeben sein kann und wobei $K_1$ der Kompressionsmodul des Substrats und $K_2$ der Kompressionsmodul des Halbleiter-Widerstandselements ist.

Der Kompressionsmodul K ist eine Materialkonstante, welche sich aus den Materialparametern Elastizitätsmodul E und Querkontraktionszahl v über den

Zusammenhang $K = \dfrac{E}{1 - 2v}$ ergibt.

Weiterhin kann der Parameter A auch durch die folgende Beziehung gegeben sein:

$$A = 1{,}9976 \left( \frac{K_2}{K_1} \right)^{-0{,}4362}$$

Dabei kann die Abweichung der oben angegebenen Näherung $2\sqrt{\dfrac{K_1}{K_2}}$ zur hier angegebenen Beziehung in einem für das Druckmesselement besonders bevorzugten Bereich für die erste und zweite Dicke kleiner als 8% sein.

Besonders vorteilhaft kann es sein, wenn das Verhältnis der ersten Dicke zur zweiten Dicke größer oder gleich $0,8 \cdot A$ und kleiner oder gleich $1,2 \cdot A$ ist.

Mit dem hier beschriebenen Verhältnis der ersten Dicke zur zweiten Dicke kann jeweils eine besonders hohe Empfindlichkeit des Druckmesselements erzielt werden.

Weiterhin haben die Erfinder herausgefunden, dass sich in einem Bereich von größer oder gleich $0,9 \cdot A$ und kleiner oder gleich $1,1 \cdot A$ für das Verhältnis der ersten Dicke zur zweiten Dicke eine besonders hohe Empfindlichkeit ergeben kann.

Durch die Steigerung der Empfindlichkeit des Druckmesselements kann das Druckmesselement auch bei der Messung von kleinen Drücken, das heißt Drücken unterhalb von 1000 bar, weiterhin beispielsweise von größer oder gleich 100 bar, eingesetzt werden. Darüber hinaus eignet sich ein hier beschriebenes Druckmesselement aber gleichzeitig auch zur Druckmessung im Mittel- und Hochdruckbereich, insbesondere zur Messung von Drücken größer oder gleich 1000 bar. Das heißt, das hier beschriebene Druckmesselement weist einen besonders großen Druckmessbereich auf.

Des Weiteren erweist sich ein hier beschriebenes Druckmesselement als ein besonders kostengünstiges Druckmesselement, da aufgrund der Steigerung der Empfindlichkeit des Druckmesselements im Vergleich zu bekannten Sensoren auf einfachere und kostengünstigere Sensorelektronik zurückgegriffen werden kann.

Gemäß einer weiteren Ausführungsform beträgt das Verhältnis der ersten Dicke zur zweiten Dicke

$$2\sqrt{\frac{K_1}{K_2}}$$ 0,75, was einer Toleranz von ungefähr +/- 50% entspricht, bevorzugt $$2\sqrt{\frac{K_1}{K_2}}$$ ± 0,3, was einer Toleranz von ungefähr 20% entspricht, und besonders bevorzugt $$2\sqrt{\frac{K_1}{K_2}}$$ + 0,15 , was einer Toleranz von ungefähr 10% entspricht.

Ein Druckmesselement, welches ein derartiges Verhältnis von erster zu zweiter Dicke aufweist, insbesondere das zuletzt beschriebene Verhältnis, erweist sich als ein besonders empfindliches Druckmesselement, welches auch zur Messung von sehr kleinen Drükken, also unterhalb von 1000 bar bis zu 100 bar hinunter, eingesetzt werden kann.

Gemäß einer weiteren Ausführungsform weisen das Substrat und das piezoresistive Halbleiter-Widerstandselement mechanisch fehlangepasste Materialien auf, so dass das Druckmesselement als entsprechendes Verbund-Messelement mit mechanisch fehlangepassten Elementen ausgeführt ist. Insbesondere kann das Substrat einen geringeren Elastizitätsmodul aufweisen als das Halbleiter-Widerstandselement.

Gemäß einer weiteren Ausführungsform ist der Kompressionsmodul $K_1$ des Substrats kleiner als der Kompressionsmodul $K_2$ des Halbleiter-Widerstandselements, also $K_1 < K_2$.

Ein geringerer Elastizitätsmodul und/oder einer geringerer Kompressionsmodul kann insbesondere eine geringere Steifigkeit und damit eine größere Verformbarkeit zur Folge haben.

Es hat sich gezeigt, dass durch die im Vergleich zum Halbleiter-Widerstandselement geringere Steifigkeit des Substrats ein mechanisch günstigerer Zustand bei einer auftretenden schalenförmigen Verbiegung des Druckmesselements während der Druckmessung und dadurch eine besonders hohe Empfindlichkeit des Druckmesselements erreicht werden kann.

Gemäß einer weiteren Ausführungsform weist das Halbleiter-Widerstandselement Silizium auf. Vorzugsweise handelt es sich dabei um sogenanntes prozessiertes Silizium mit eindotierten Widerständen, Leiterbahnen und Bondstellen. Auf das Halbleiter-Widerstandselement können Leiterbahnen, welche beispielsweise Aluminium, Kupfer oder Gold aufweisen, und Bondkontakte aufgebracht werden, so dass das Druckmesselement von außen kontaktiert werden kann.

Gemäß einer bevorzugten Ausführungsform weist das Substrat ein fügbares Material auf. Vorzugsweise kann das Substrat durch ein zwischenschichtfreies Fügeverfahren, beispielsweise durch anodisches Bonden, zwischenschichtfrei mit dem Halbleiter-Widerstandselement verbunden werden. Das Substrat kann durch das zwischenschichtfreie Fügeverfahren, also beispielsweise das anodische Bonden, vollflächig mit dem Halbleiter-Widerstandselement verbunden werden. Das Substrat und das Halbleiter-Widerstandselement weisen jeweils eine Grundfläche auf und die beiden Grundflächen können derart miteinander verbunden werden, dass die beiden Grundflächen in direktem Kontakt stehen und keinerlei Zwischenräume aufweisen.

Gemäß einer weiteren Ausführungsform weist das Substrat ein Glas auf, beispielsweise Borosilikatglas und/oder Hoya SD-2 Glas. Das Substrat kann zum Beispiel Borofloat aus der Gruppe Borosilikatglas aufweisen.

Gemäß einer weiteren Ausführungsform weist das Substrat Borosilikatglas auf. Das Verhältnis der ersten Dicke zur zweiten Dicke liegt für ein Substrat, das Borosilikatglas aufweist, und für ein Halbleiter-Widerstandselement, das Silizium aufweist, bevorzugt zwischen 1,4 und 1,65. In einer besonders bevorzugten Ausführungsform ist das Verhältnis der ersten Dicke zur zweiten Dicke dabei gleich 1,54. Durch das hier beschriebene Dickenverhältnis der Dicke des Silizium aufweisenden Halbleiter-Widerstandselements zur Dicke des Borosilikatglas aufweisenden Substrats kann eine besonders hohe Empfindlichkeit des Druckmesselements erreicht werden. Gemäß einer weiteren Ausführungsform weisen das Halbleiter-Widerstandselement Silizium und das Substrat Hoya SD-2 Glas auf. In diesem Fall kann das Verhältnis der ersten Dicke zur zweiten Dicke größer oder gleich 1,79 und kleiner oder gleich 1,99 und besonders bevorzugt 1,89 sein.

Es hat sich gezeigt, dass durch ein derartiges Verhältnis von erster Dicke zu zweiter Dicke bei einem Druckmesselement, welches Hoya SD-2 Glas als Substrat und Silizium als Halbleiter-Widerstandselement aufweist, die Eigenschaften des Druckmesselements, insbesondere hinsichtlich der Empfindlichkeit des Druckmesselements, deutlich verbessert werden können.

In einer weiteren Ausführungsform weist das piezoresistive Druckmesselement ein Halbleiter-Widerstandselement auf einem Substrat auf, wobei das Halbleiter-Widerstandselement Silizium aufweist und das Substrat eine Keramik aufweist.

In einer weiteren Ausführungsform weist das Druckmesselement eine Haupterstreckungsebene mit Haupterstreckungsrichtungen auf. Vorzugsweise steht die Haupterstreckungsebene senkrecht zur ersten und zweiten Dicke, also senkrecht zur zweiten Dicke des Substrats und zur ersten Dicke des Halbleiter-Widerstandselements. Das Druckmesselement kann entlang der Haupterstreckungsrichtungen Abmessungen von größer oder gleich 1,5 mm und kleiner oder gleich 2,0 mm aufweisen. Die Abmessungen der Haupterstreckungsrichtungen können im Folgenden bei einer mehreckigen, beispielsweise rechteckigen oder quadratischen Form, auch als Kantenlängen des Druckmesselements bezeichnet werden. Bei einer kreisförmigen oder elliptischen Form des Druckmesselements können die Abmessungen auch dem Durchmesser oder den Hauptdurchmessern entsprechen.

Gemäß einer weiteren Ausführungsform weist das Druckmesselement eine dritte Dicke auf. Dabei kann die dritte Dicke des Druckmesselements, insbesondere wenn zum Verbinden des Halbleiter-Widerstandselements mit dem Substrat ein zwischenschichtfreies Fügeverfahren wie beispielsweise das anodische Bonden verwendet wird, der Summe der ersten Dicke und der zweiten Dicke entsprechen. Das Druckmesselement weist entlang seiner Haupterstreckungsrichtungen Abmessungen auf, wobei das Verhältnis zumindest einer und bevorzugt jeder der Abmessungen zu der dritten Dicke, also bei einem Druckmesselement mit mehreckiger Form das Verhältnis der Kantenlängen des Druckmesselements zur Dicke des Druckmesselements, größer gleich 2 ist. Durch derartige geometrische Abmessungen des Druckmesselements kann zusätzlich eine hohe Empfindlichkeit ermöglicht werden.

Eine Vergrößerung beziehungsweise Reduzierung der Abmessungen des Druckmesselements in der Haupterstreckungsebene ist in gleichem Verhältnis möglich wie eine Vergrößerung beziehungsweise Reduzierung der ersten Dicke und einer daran angepassten zweiten Dicke bei gleich bleibender Empfindlichkeit des Druckmesselements. Dies ist von besonderem Vorteil, beispielsweise wenn das Druckmesselement bezüglich seiner maximalen geometrischen Abmessungen bestimmte Vorgaben erfüllen muss. Weiterhin kann durch eine Reduzierung der Abmessungen, das heißt durch eine Reduzierung der Kantenlängen bei einem mehreckig geformten Druckmesselement, und durch eine gleichzeitige Reduzierung der dritten Dicke des Druckmesselements aufgrund der Miniaturisierung eine Reduzierung der Stückkosten eines hier beschriebenen Druckmesselements erreicht werden.

Gemäß einem weiteren Ausführungsbeispiel weist das Halbleiter-Widerstandselement eine erste Dicke von kleiner oder gleich 400 $\mu$m, beispielsweise 390 $\mu$m auf. Weiterhin kann das Halbleiter-Widerstandselement eine erste Dicke von größer oder gleich 100 $\mu$m, beispielsweise 200 $\mu$m, aufweisen. Das Substrat kann beispielsweise eine zweite Dicke von größer oder gleich 50 $\mu$m und kleiner oder gleich 650 $\mu$m aufweisen, wobei bei einer Wahl der ersten Dicke die zweite Dicke gemäß der oben angegebenen Dickenverhältnis angepasst ist und umgekehrt.

Gemäß zumindest einer Ausführungsform wird das Druckmesselement zur Messung eines Druckbereiches verwendet, wobei der Messbereich eine Untergrenze aufweist, welche kleiner 1000 bar ist. Das hier beschriebene Druckmesselement eignet sich insbesondere aber auch zur Messung von Drücken von größer oder gleich 1000 bar.

Gemäß einer weiteren Ausführungsform wird das hier beschriebene Druckmesselement zur Messung eines Druckbereiches verwendet, wobei die Untergrenze des Messbereiches 100 bar ist. Durch die an die erste Dicke, also die Dicke des Halbleiter-Widerstandselements, angepasste zweite Dicke, das heißt die Dicke des Substrats, und die damit verbundene erhöhte Empfindlichkeit des Druckmesselements eignet sich das hier beschriebene Druckmesselement auch zur Messung von relativ niedrigen Drücken ab dem erwähnten Bereich von 100 bar bis über 1000 bar hinaus.

Weitere Vorteile und vorteilhafte Ausführungsformen des angegebenen piezoresistiven Druckmesselements ergeben sich aus den im Folgenden in Verbindung mit den Figuren 1 bis 3 beschriebenen Ausführungsformen.

Es zeigen:

Figur 1    eine schematische Ansicht eines piezoresistiven Druckmesselements gemäß einem Ausführungsbeispiel,

Figur 2    eine Aufsicht auf ein piezoresistives Druckmesselement gemäß einem Ausführungsbeispiel und

Figur 3    ein Diagramm, welches die Empfindlichkeit eines piezoresistiven Druckmesselements gemäß einem Ausführungsbeispiel in Abhängigkeit der ersten und zweiten Dicke darstellt.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben dick oder groß dimensioniert dargestellt sein.

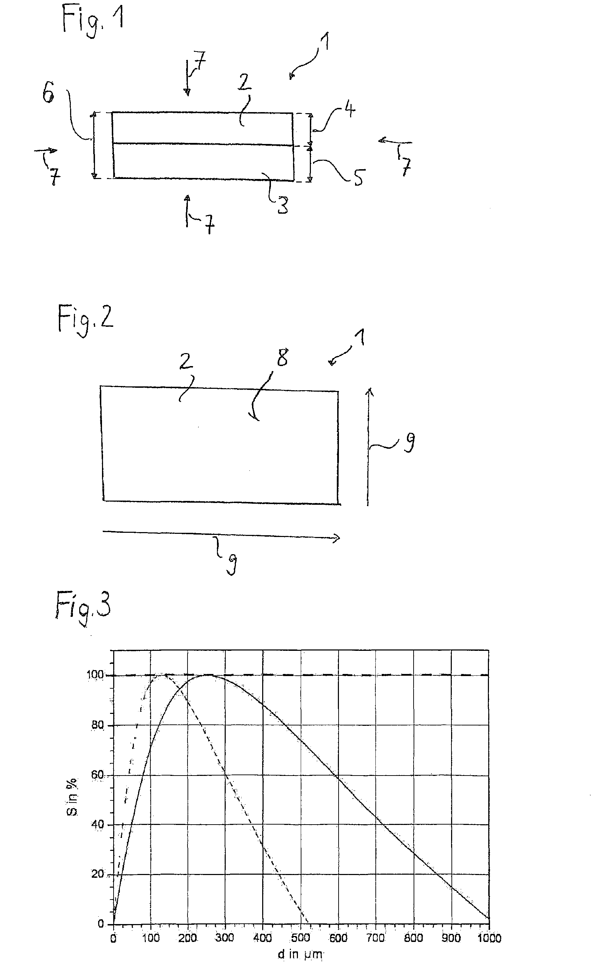

In Figur 1 ist ein piezoresistives Druckmesselement 1 gemäß einem Ausführungsbeispiel gezeigt. Das piezoresistive Druckmesselement 1 weist ein piezoresistives schichtförmiges Halbleiter-Widerstandselement 2 auf einem Substrat 3 auf. Das Halbleiter-Widerstandselement 2 weist eine erste Dicke 4 und das Substrat 3 eine zweite Dicke 5 auf.

Vorzugsweise ist die zweite Dicke 5 an die erste Dicke 4 angepasst, so dass eine besonders hohe Empfindlichkeit des piezoresistiven Druckmesselements 1 aufgrund des optimierten Dickenverhältnisses erreicht werden kann.

Es ist besonders vorteilhaft, wenn das Verhältnis der ersten Dicke 4 zur zweiten Dicke 5 einen Wert größer oder gleich $0,5 \cdot 2\sqrt{\dfrac{K_1}{K_2}}$ und kleiner oder gleich

$1,5 \cdot 2\sqrt{\dfrac{K_1}{K_2}}$ aufweist, wobei $K_1$ der Kompressionsmodul des Substrats 3 und $K_2$ der Kompressionsmodul des Halbleiter-Widerstandselements 2 ist.

Insbesondere ist es von Vorteil, wenn das Verhältnis der ersten zur zweiten Dicke 4, 5 einen Wert aufweist, der größer oder gleich $0,9 \cdot 2\sqrt{\dfrac{K_1}{K_2}}$ und kleiner oder gleich $1,1 \cdot 2\sqrt{\dfrac{K_1}{K_2}}$ ist.

Das piezoresistive schichtförmige Halbleiter-Widerstandselement 2 weist im gezeigten Ausführungsbeispiel Silizium auf. Vorzugsweise handelt es sich dabei prozessiertes Silizium, in welches Widerstände oder Widerstandsbereiche eindotiert sind.

Des Weiteren kann das piezoresistive schichtförmige Halbleiter-Widerstandselement 2 eine oder mehrere Leiterbahnen, beispielsweise aus Aluminium, Kupfer oder Gold, und Bondstellen zur Kontaktierung des Druckmesselements 1 aufweisen (hier nicht gezeigt). Die Kontaktierung erfolgt dabei vorzugsweise mittels eines sogenannten Drahtbondverfahrens.

Das Halbleiter-Widerstandselement 2 ist im gezeigten Ausführungsbeispiel vollflächig mit dem Substrat 3 verbunden. Das Halbleiter-Widerstandselement 2 und das Substrat 3 weisen jeweils eine Grundfläche auf und die beiden Grundflächen stehen in direktem Kontakt zueinander. Beispielsweise ist das Halbleiter-Widerstandselement 2 mittels eines zwischenschichtfreien Fügeverfahrens, wie zum Beispiel anodisches Bonden, mit dem Substrat 3 verbunden.

Weiterhin weist das Druckmesselement 1 eine dritte Dicke 6 auf. Dabei entspricht im gezeigten Ausführungsbeispiel die dritte Dicke 6 der Summe der ersten Dicke 4 und der zweiten Dicke 5.

Die in Figur 1 dargestellten Pfeile deuten den allseitig auf das Druckmesselement 1 wirkenden Druck 7 an. Der auch auf die Verbindungsstellen zwischen Halbleiter-Widerstandselement 2 und Substrat 3 wirkende Druck 7 kann dabei eine schalenförmige Verbiegung des Druckmesselements hervorrufen.

Insbesondere weisen das Halbleiter-Widerstandselement 2 und das Substrat 3 im gezeigten Ausführungsbeispiel verschiedene Elastizitätsmoduln und/oder verschiedene Kompressionsmoduln auf. Insbesondere ist der Elastizitätsmodul und der Kompressionsmodul des Substrats 3 kleiner als der Elastizitätsmodul und/oder der Kompressionsmodul des Halbleiter-Widerstandselements 2, wodurch durch den Druck 7 eine mechanische Verspannung des als Verbund-Messelement ausgeführten Druckmesselements 1 hervorgerufen wird. Das piezoresistive Halbleiter-Widerstandselement 2 weist dadurch bei verschiedenen Drücken 7 verschiedene Widerstände auf. Weiterhin wird bevorzugt, dass das Halbleiter-Widerstandselement 2 und das Substrat 3 einen möglichst gleichen Temperaturkoeffizienten aufweisen.

Weiterhin weist das Substrat 3 im gezeigten Ausführungsbeispiel Borofloat aus der Gruppe Borosilikatglas auf. Insbesondere weist dabei das Verhältnis der ersten Dicke 4 zur zweiten Dicke 5 einen Wert im oben genannten Bereich und besonders bevorzugt einen Wert von 1,54 auf.

Es hat sich gezeigt, dass Druckmesselemente, welche Silizium und Borosilikatglas aufweisen, bei einem derartigen Dickenverhältnis eine besonders hohe Empfindlichkeit erreichen.

Alternativ zum gezeigten Ausführungsbeispiel kann das Substrat 3 auch Hoya SD-2 Glas aufweisen. Bezüglich der Empfindlichkeit des hier beschriebenen Druckmesselements 1 hat es sich bei diesem alternativen Ausführungsbeispiel dabei als besonders vorteilhaft herausgestellt, wenn das Verhältnis der ersten Dicke 4 zur zweiten Dicke 5 einen Wert von 1,89 aufweist.

In einem weiteren alternativen Ausführungsbeispiel kann das Substrat 3 eine Keramik aufweisen, wobei auch hierbei das Verhältnis der ersten Dicke 4 zur zweiten Dicke 5 im oben genannten Bereich liegt.

Dadurch, dass das Substrat 3 einen kleineren Elastizitätsmodul als das Halbleiter-Widerstandselement 2 aufweist, kann bei der Verwendung des Druckmesselements 1 und der auftretenden schalenförmigen Verbiegung des Halbleiter-Widerstandselements 2 und des Substrats 3 ein mechanisch günstiger Zustand herbeigeführt werden. Dies resultiert ebenso wie das optimierte Verhältnis der ersten Dicke 4 des Halbleiter-Widerstandselements 2 zur zweiten Dicke 5 des Substrats 3 in einer besonders hohen Empfindlichkeit des hier beschriebenen Druckmesselements 1.

In Figur 2 ist eine Aufsicht auf ein piezoresistives Druckmesselement 1 gemäß einem Ausführungsbeispiel gezeigt, wobei das Druckmesselement 1, soweit nicht anders beschrieben, die in Verbindung mit Figur 1 beschriebenen Merkmale aufweisen kann. Das piezoresistive Druckmesselement 1 weist ein piezoresistives schichtförmiges Halbleiter-Widerstandselement 2 auf einem Substrat 3 auf, wobei das Substrat 3 jedoch in Figur 2 nicht zu sehen ist, da das Substrat 3 unter dem Halbleiter-Widerstandselement 2 angeordnet ist und deshalb in der Aufsicht auf das Druckmesselement 1 von dem Halbleiter-Widerstandselement 2 verdeckt ist.

Das Druckmesselement 1 weist eine Haupterstreckungsebene 8 mit Haupterstreckungsrichtungen 9 auf, wobei die Haupterstreckungsebene 8 vorzugsweise senkrecht zu den in Figur 1 gezeigten Dicken 4, 5, 6 steht. Im gezeigten Ausführungsbeispiel weist das Druckmesselement 1 in der Haupterstreckungsebene 8 eine mehreckige, insbesondere eine rechteckige, Form auf, so dass die Abmessungen 9 den Kantenlängen entsprechen. Alternativ dazu kann das Druckmesselement 1 beispielsweise auch eine kreisförmige oder eine elliptische Form aufweisen, wobei dann die Abmessungen 9 dem Durchmesser beziehungsweise den Hauptdurchmessern in der Haupterstreckungsebene 8 entsprechen.

Als besonders vorteilhaft erweist es sich im gezeigten Ausführungsbeispiel, wenn das Druckmesselement 1 entlang der Haupterstreckungsrichtungen 9 Abmessungen von größer oder gleich 1,5 mm und kleiner oder gleich 2,0 mm aufweist.

Weiterhin weist das Druckmesselement 1 eine dritte Dicke 6 (siehe Figur 1) im Vergleich zu den Abmessungen entlang der Haupterstreckungsrichtungen 9 auf, wobei das Verhältnis der Abmessungen zu der dritten Dicke 6 größer gleich 2 ist. In anderen Worten ist also das Verhältnis der Kantenlängen des Druckmesselements 1 zu der Dicke 6 des Druckmesselements 1 größer gleich 2. Durch ein derartiges Verhältnis von Kantenlängen zur Dicke 6 des Druckmesselements 1 können die Eigenschaften des hier beschriebenen Druckmesselements 1, insbesondere seine Empfindlichkeit, im Vergleich zu bekannten Drucksensoren verbessert werden.

Die in den Figuren 1 und 2 gezeigten Druckmesselemente 1 können beispielsweise zur Messung eines Druckbereiches verwendet werden, wobei der Messbereich eine Untergrenze, die kleiner 1000 bar ist, aufweist.

Es hat sich gezeigt, dass sich ein hier beschriebenes Druckmesselement 1 aufgrund der optimalen Anpassung der ersten Dicke an die zweite Dicke und der damit verbundenen Empfindlichkeitssteigerung des Druckmesselements neben einer Verwendung zur Druckmessung im Hochdruckbereich von größer 1000 bar auch besonders gut für Druckmessungen von Drükken unterhalb von 100 bar und größer oder gleich 100 bar eignet.

In Figur 3 ist die Empfindlichkeit eines Druckmesselements 1 gemäß den vorangegangen Ausführungsbeispielen für unterschiedliche Verhältnisse von erster Dicke 4 zu zweiter Dicke 5 in einem Diagramm gezeigt. Dabei sind auf der horizontalen Achse die zweite Dicke 5, also die Dicke des Substrats 3, welche mit d bezeichnet und in $\mu$m angegeben ist, und auf der vertikalen Achse die Empfindlichkeit S des Druckmesselements 1 in Prozent aufgetragen. 100% der Empfindlichkeit S des Druckmesselements 1 entspricht der erreichbaren maximalen Empfindlichkeit für ein Druckmesselement 1 mit gegebenem Layout und/oder Design, insbesondere des Halbleiter-Widerstandselements 2.

In dem Diagramm ist für zwei verschiedene erste Dicken 4, das heißt Dicken des Halbleiter-Widerstandselements 2, welche rein beispielhaft 390 $\mu$m (durchgezogene Linie) beziehungsweise 200 $\mu$m (gestrichelte Linie) betragen, die entsprechende Empfindlichkeit des Druckmesselements in Abhängigkeit von der zweiten Dicke 5 aufgezeigt. Dabei lässt sich erkennen, dass es für die zwei verschiedenen ersten Dicken 4 bezüglich der Empfindlichkeit des Druckmesselements 1 jeweils ein optimales Dickenverhältnis von erster zu zweiter Dicke gibt. Dieses optimale Dickenverhältnis tritt jeweils am Maximum der beiden Graphen auf. Dabei ist das absolute Maximum der Empfindlichkeit für ein jeweils optimales Dickenverhältnis von erster zu zweiter Dicke gleich.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

Bezugszeichenliste

1    piezoresistives Druckmesselement

2    Halbleiter-Widerstandselement

3    Substrat

4    erste Dicke

5    zweite Dicke

6    dritte Dicke

7    Druckbelastung

8    Haupterstreckungsebene

9    Haupterstreckungsrichtungen

**Patentansprüche**

1.  Piezoresistives Druckmesselement (1) aufweisend

- ein piezoresistives schichtförmiges Halbleiter-Widerstandselement (2) auf einem Substrat (3),
- wobei das Halbleiter-Widerstandselement (2) eine erste Dicke (4) aufweist und das Substrat (3) eine zweite Dicke (5) aufweist,
- wobei das Verhältnis der ersten Dicke (4) zur zweiten Dicke (5) einen Wert größer oder gleich 0,5·A und kleiner oder gleich 1,5·A aufweist,

- wobei $A = 2\sqrt{\dfrac{K_1}{K_2}}$ , und

- wobei $K_1$ der Kompressionsmodul des Substrats (3) und $K_2$ der Kompressionsmodul des

Halbleiter-Widerstandselements (2) ist.

**2.** Druckmesselement nach Anspruch 1,

- wobei das Verhältnis der ersten Dicke (4) zur zweiten Dicke (5) einen Wert von größer oder gleich 0,9·A und kleiner oder gleich 1,1·A aufweist.

**3.** Druckmesselement nach einem der vorhergehenden Ansprüche,

- wobei das piezoresistive schichtförmige Halbleiter-Widerstandselement (2) Silizium aufweist.

**4.** Druckmesselement nach Anspruch 3,

- wobei das Substrat (3) Borosilikatglas, insbesondere Borofloat, aufweist.

**5.** Druckmesselement nach Anspruch 4,

- wobei das Verhältnis der ersten Dicke (4) zur zweiten Dicke (5) einen Wert größer oder gleich 1,4 und kleiner oder gleich 1,65 aufweist.

**6.** Druckmesselement nach Anspruch 3,

- wobei das Substrat (3) Hoya SD-2 Glas aufweist.

**7.** Druckmesselement nach Anspruch 6,

- wobei das Verhältnis der ersten Dicke (4) zur zweiten Dicke (5) einen Wert größer oder gleich 1,79 und kleiner oder gleich 1,99 aufweist.

**8.** Druckmesselement nach Anspruch 3,

- wobei das Substrat (3) eine Keramik aufweist.

**9.** Druckmesselement nach einem der vorhergehenden Ansprüche,

- wobei das Substrat (3) einen geringeren Elastizitätsmodul aufweist als das Halbleiter-Widerstandselement (2).

**10.** Druckmesselement nach einem der vorhergehenden Ansprüche,

- wobei das Druckmesselement (1) eine Haupterstreckungsebene (8) mit Haupterstreckungsrichtungen (9) aufweist,
- wobei das Druckmesselement (1) entlang der Haupterstreckungsrichtungen (9) Abmessungen von größer oder gleich 1,5 mm und kleiner oder gleich 2,0 mm aufweist.

**11.** Druckmesselement nach einem der vorhergehenden Ansprüche,

- wobei das Druckmesselement (1) eine dritte Dicke (6) aufweist,
- wobei das Druckmesselement (1) eine Haupterstreckungsebene (8) mit Haupterstreckungsrichtungen (9) aufweist,
- wobei das Druckmesselement (1) entlang der Haupterstreckungsrichtungen (9) Abmessungen aufweist,
- wobei das Verhältnis der Abmessungen zu der dritten Dicke (6) größer gleich 2 ist.

**12.** Druckmesselement nach einem der vorhergehenden Ansprüche,

- wobei das Halbleiter-Widerstandselement (2) vollflächig mit dem Substrat (3) verbunden ist.

**13.** Druckmesselement nach einem der vorhergehenden Ansprüche,

- wobei das Halbleiter-Widerstandselement (2) mittels eines zwischenschichtfreien Fügeverfahrens mit dem Substrat (3) verbunden ist.

**14.** Druckmesselement nach einem der vorhergehenden Ansprüche,

- wobei das Halbleiter-Widerstandselement (2) und das Substrat (3) durch anodisches Bonden verbunden sind.

**15.** Verwendung des Druckmesselements gemäß der vorhergehenden Ansprüche zur Messung eines Druckbereiches,

- wobei der Messbereich eine Untergrenze aufweist, die kleiner 1000 bar ist und insbesondere 100 bar ist.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19963786 A1